# EUROPÄISCHE PATENTSCHRIFT

(11) **EP 2 399 791 B1**
(45) Veröffentlichungstag und Bekanntmachung des Hinweises auf die Patenterteilung: **12.08.2015**
(21) Anmeldenummer: 11005027.5
(22) Anmeldetag: 21.06.2011
(51) Int. Cl.: B60T 7/16, B60T 13/66, B60T 17/20, B60T 17/22

(54) **Vorrichtung und Verfahren zum Funkfernsteuern eines mobilen Bremsprobegerätes**
Device and method for remote controlling a mobile brake sample device
Dispositif et procédé de télécommande radio d'un appareil de test de freinage mobile

(30) Priorität: 28.06.2010 DE 102010025346
(43) Veröffentlichungstag der Anmeldung: 28.12.2011
(73) Patentinhaber: DB Schenker Rail Deutschland AG, 55116 Mainz (DE)
(72) Erfinder: Schneberger, Jens, 55452 Rümmelsheim (DE); Weiss, Gustav, 91489 Wilhelmsdorf (DE); Rützel, Bernd, 97737 Gemünden (DE)
(74) Vertreter: Zinken-Sommer, Rainer

(56) Entgegenhaltungen:
- EP-A1- 1 719 680
- WO-A1-94/07729
- DE-U1-202006 015 627
- US-A1- 2002 111 726
- US-A1- 2007 247 000
- US-B1- 6 474 150

## Beschreibung

Die Erfindung betrifft eine Vorrichtung und Verfahren zum Funkfernsteuern eines mobilen Bremsprobegerätes.

Eisenbahnfahrzeuge sind meist mit einer Druckluftbremse ausgestattet. Um die Funktionstüchtigkeit der Bremse zu gewährleisten, muss nachgewiesen werden, dass die Bremse bei vorgeschriebenen Druckluftverhältnissen korrekt anliegt oder gelöst ist. Hierzu wird von autorisierten Personen eine Bremsprobe durchgeführt. Die Durchführung der Bremsprobe ist in Deutschland in der Bremsvorschrift VDV 757 bzw. Ril 915.01 (BreVo) geregelt.

Die Bremsprobe muss z.B. nach der Zusammenstellung eines Zuges durchgeführt werden. Nachdem das Bremssystem mit Druckluft befüllt wurde, wird zunächst die Dichtheit des Druckluftsystems überprüft. Gilt das Bremssystem als dicht, wird das korrekte Anlegen und Lösen der Bremse geprüft, indem der Luftdruck in der Hauptluftleitung entsprechend abgesenkt bzw. wieder erhöht wird. Im normalen Betrieb würde dies durch Betätigen des Führerbremsventils, z.B. im Führerstand einer Lokomotive, erfolgen. Wenn keine Lokomotive vorhanden ist, die sowohl die Druckluft als auch dessen Steuerung mithilfe des Führerbremsventils zur Verfügung stellt, muss dies durch ein Bremsprobegerät simuliert werden. Das Bremsprobegerät stellt also alle Funktionen zur Verfügung, die von einer Lokomotive auf die Bremsanlage der Druckluftbremse ausgeübt werden. Somit kann mithilfe eines Bremsprobegerätes bei der Zugbildung die Funktionsfähigkeit der Druckluftbremse auch ohne das Ankoppeln einer Lokomotive überprüft werden.

Hierfür gibt es ortsfeste und mobile Bremsprobegeräte.

Mobile Bremsprobegeräte werden an Druckluftständer, die über ein Druckluftverteilungsnetz an einer Bremsprobeanlage (u.a. bestehend aus Druckluftkompressor, Kondensationstrockner, Öl- und Partikelfilter) mit standardisiertem Anschluss angebracht. Die Bedienungselemente zum Einstellen des Luftdrucks auf der Eingangs- und Ausgangsseite der mobilen Bremsprobegeräte werden meist manuell z.B. mit Knebelgriffen bedient.

Während der Bremsprobe muss der Bremsprobedurchführende am Zug entlang laufen und das Anlegen und Lösen der Bremsen überprüfen. Zum Umschalten der Druckluftverhältnisse am Bremsprobegerät muss er also teilweise lange Wege vom entfernten Zugende bis zum Bremsprobegerät zurücklegen, was entsprechend zeitaufwändig ist und die Unfallgefahr durch z.B. Stolpern erhöht. Alternativ kann ein zweiter Mitarbeiter das Bremsprobegerät nach den Anweisungen des Bremsprobedurchführenden bedienen, was jedoch wiederum den Personaleinsatz erhöht.

Die DE 37 04 826 A1 beschreibt eine Bremsprüfanlage für Druckluftbremsen von Schienenfahrzeugen. Nach erfolgter Einschaltung steuert sie den zeitlichen und druckmäßigen Ablauf einer Bremsenprüfung. Dies geschieht, indem eine speicherprogrammierbare Steuereinheit Magnetventile geeignet steuert.

Die DE 100 58 307 A1 beschreibt eine Bremsprobeanlage und ein Verfahren zur Überprüfung von Bremsen in Schienenfahrzeugen. Die Bremsprobeanlage umfasst ein zentrales Bremsprobegerät und wenigstens eine Zusatzgeräteeinheit, wobei die Zusatzgeräteeinheit Mittel zum Absperren der Luftzufuhr zum zu prüfenden Schienenfahrzeug umfasst. Dadurch ist es möglich, die Absperreinheit so nahe wie möglich an die Stelle der Zugprüfung aufzustellen, sodass der maximale Abstand der Luftleitung zum zu prüfenden Zug 25 m beträgt. In einer Ausführung der Erfindung wird an jeder Zusatzgeräteeinheit eine Fernbetätigung angebracht, mit deren Hilfe die jeweilige Zusatzgeräteeinheit ausgewählt und aktiviert werden kann. Hierbei kann z.B. auch das Ende des Prüfvorgangs an der Fernbetätigungseinheit angezeigt werden.

Die EP 1 719 680 A1 beschreibt ein Bremsprobegerät, das aus zwei Sender-/Empfänger-Geräten besteht. Eines davon ist eine tragbare Steuerung. Das andere ist in der Lokomotive platziert und greift direkt in die Druckluftsteuerung der Lokomotive ein. Dies hat den Nachteil, dass zusätzliche Sicherungsmechanismen installiert werden müssen, um einerseits einen sicheren Ablauf der Bremsprobe zu gewährleisten und andererseits sicher zu stellen, dass die in der Lokomotive installierten Komponenten während des normalen Betriebs keine Probleme verursachen können. Weiterhin kann das System nicht verwendet werden, wo keine Lokomotive zur Durchführung der Bremsprobe zur Verfügung steht, z.B. beim Zusammenstellen von Zügen auf Rangierbahnhöfen.

Weiterhin sind auch mobile Bremsprobegeräte bekannt, die mit einer Fernbetätigungseinrichtung, z.B. mit Hilfe einer Funkfernbedienung, ausgestattet sind.

Diese mobilen fernsteuerbaren Bremsprobegeräte sind allerdings in der Anschaffung recht teuer, da sie mit einer eigenen Telematik ausgestattet sind.

Die US 2007/0247000 A1 beschreibt ein solches vollwertiges Bremsprobegerät mit einer tragbaren Steuerung, eigener Telematikausstattung, und eigenen Ventilen, mit denen der Luftdruck einer speisenden Druckluftanlage gesteuert werden kann. Hierfür sind auch entsprechende Luftdrucküberwachungssensoren erforderlich.

Auch die US 6 474 150 B1 beschreibt ein fernsteuerbares Bremsprobegerät, mit eigener Telematikausstattung und eigenen Ventilen. Über die tragbare Steuerung kann der Befehl zum Lösen der Bremsen von einem Bremsprobedurchführenden ausgelöst werden, wenn er sich am Ende des Zuges befindet.

Besonders nachteilig bei ferngesteuerten Bremsprobegeräten im Stand der Technik ist, dass sie recht komplexe Geräte darstellen. Ein Betreiber, der bereits stationäre fernsteuerbare Bremsprobegeräte und einfachere, nicht ferngesteuerte, mobile Bremsprobegeräte benutzt, muss daher einen erheblichen Aufwand betreiben, um die einfachen mobilen Bremsprobegeräte durch fernsteuerbare Geräte zu ersetzen und somit die Vorteile einer ferngesteuerten Bremsprobe überall nutzen zu können. Die vorhandene Technik der manuellen Bremsprobegeräte wird dabei nicht genutzt.

Hingegen sind mobile Bremsprobegräte ohne Fernsteuereinheit deutlich günstiger, müssen jedoch manuell bedient werden.

Verfügt ein EVU jedoch bereits über Telematiksysteme, die bei entsprechend ausgerüsteten fernsteuerbaren stationären Bremsprobegeräten eingesetzt werden, ist es wirtschaftlich sinnvoll, die günstigen, manuell zu bedienenden mobilen Bremsprobegeräte so zu modifizieren, dass die vorhandene Telematik zur Fernsteuerung verwendet werden kann.

Aufgabe der Erfindung ist es, manuell zu bedienende mobile Bremsprobegeräte so auszurüsten, dass sie in wirtschaftlich günstiger Weise ferngesteuert verwendet werden können und Verfahren bereitzustellen, diese Fernsteuerung zu verwenden.

Bei der DB Schenker Rail Deutschland AG ist es bei entsprechend ausgerüsteten stationären Bremsprobegeräten beispielsweise möglich, mithilfe des IT-Verfahrens CDD (Cargo Digitale Datenkommunikation) über Mobilfunk die Bremsprobegeräte durch ein mobiles CDD-Endgerät fern zu steuern. Die entsprechenden Telematikmodule (im folgenden Fernwirkeinheit genannt), die an die stationären Bremsprobegeräte angeschlossen sind, können erfindungsgemäß in unveränderter oder leicht modifizierter Form auch zur Fernsteuerung der mobilen Bremsprobegeräte verwendet werden, wenn die per Mobilfunk übertragenen Befehle zur Steuerung der mobilen Bremsprobegeräte entsprechend mechanisch auf die Bedienelemente übertragen werden.

Dies kann z.B. gemäß **Anspruch 1** mithilfe einer Motoreinheit erfolgen, die die sonst manuell durchgeführten Aktionen ausführt. Ein mobiles Kommunikationsendgerät liefert über eine Datenfernübertragung die Befehle zum Aktivieren und Desaktivieren, die von der Fernwirkeinheit, die am mobilen Bremsprobegerät angebracht ist, empfangen und verarbeitet werden. Die Fernwirkeinheit veranlasst die mit ihr verbundene Motoreinheit die zum Ablauf der Bremsprobe erforderlichen Einstellungen am mobilen Bremsprobegerät vorzunehmen und überwacht - bei entsprechender Ausrüstung des mobilen Bremsprobegerätes - den Vorgang anhand von Druckluftmessdaten der Ausgangsseite des Bremsprobegerätes.

Die Motoreinheit steuert direkt oder indirekt die zur manuellen Bedienung des Bremsprobegerätes vorgesehenen Bedienelemente. Sie kann also entweder direkt die ursprünglich zur manuellen Betätigung vorgesehenen, äußeren Bedienelemente bedienen oder indirekt im Innern des Bremsprobegeräts die Wirkung hervorrufen, die durch die Bedienung der äußeren Elemente ausgelöst würde, ohne die äußeren Elemente direkt zu bedienen.

Die Motoreinheit verfügt hierzu z.B. über mindestens einen Elektromotor. Alternativ könnte die Motoreinheit z.B. mit mindestens einem pneumatischen Motor/Antrieb ausgestattet sein, der mithilfe von Druckluft angetrieben wird, die an geeigneter Stelle von dem Druckluftsystem abgezweigt wird. Die Druckluft kann dabei sowohl aus dem eingangsseitigen als auch aus dem ausgangsseitigen Druckluftanschluss des Bremsprobegerätes abgezweigt werden.

Die Fernwirkeinheit überwacht die Einstellungen und den Ablauf der Bremsprobe, wobei sie den Zwischen- und Endstatus eines Befehls während einer Bremsprobe erfasst und anzeigt sowie zum mobilen Endgerät kommuniziert.

Die Fernwirkeinheit ist beispielsweise mittels Kabelleitung lösbar mit der Motoreinheit verbunden, kann aber auch mit der Motoreinheit in einem Gehäuse verbaut sein. Ihre Stromversorgung kann sie z.B. über Solarmodule und/oder Akkumulatoren erhalten.

Vorteilhafte Ausführungen der Erfindung sind Gegenstände der abhängigen Ansprüche.

**Anspruch 2** beschreibt eine vorteilhafte Ausgestaltung des Anspruchs 1.

Bei einem mobilen Bremsprobegerät, das manuell bedient wird, sind z.B. Knebelgriffe angebracht, mit denen die Absperrhähne für die Druckluft am Ein- und Ausgang des Bremsprobegerätes bedient werden. Diese Bedienelemente sind dazu ausgelegt per Hand bedient zu werden. Die Motoreinheit wird nun so von außen auf das Bremsprobegerät aufgesteckt, dass mindestens einer der Griffe zur manuellen Betätigung des Bremsprobegeräts formschlüssig umfasst ist. Dies kann beispielsweise das Bedienelement auf der Ausgangsseite des Bremsprobegeräts sein. Beim Verbinden des Bremsprobegerätes mit dem neu gebildeten Zug mittels Druckluftschlauch befindet sich der Bremsprobedurchführende ohnehin am Bremsprobegerät. Deshalb ist es nicht unbedingt erforderlich, den eingangsseitigen Absperrhahn per Fernsteuerung zu bedienen. Erst nach der Dichtheitsprobe, während der der eingangsseitige Absperrhahn geschlossen werden muss, wird bei dann wieder dauerhaft geöffnetem eingangsseitigen Absperrhahn die Bremsprobe durchgeführt. Zum Anlegen und Lösen der Bremsen ist dann nur noch der ausgangsseitige (zugseitige) Absperrhahn zu öffnen und zu schließen. Von der Motoreinheit kann über die formschlüssige Umfassung eine Kraft oder ein Drehmoment auf den Knebelgriff ausgeübt werden, wodurch der Absperrhahn geöffnet bzw. geschlossen werden kann.

Die formschlüssigen Umfassungen können im einfachsten Fall auf die vorhandenen Bedienelemente, wie z.B. Knebelgriffe, des Bremsprobegerätes bei Bedarf aufgesteckt werden. Ebenso kann die Fernwirkeinheit am mobilen Bremsprobegerät leicht lösbar befestigt werden. Somit ist es möglich mit einer erfindungsgemäßen Fernsteuerung mehrere mobile Bremsprobegeräte, je nach Bedarf durch Umstecken der Fernwirk- und Motoreinheit von einem Bremsprobegerät auf ein anderes, zu bedienen, was die Wirtschaftlichkeit deutlich erhöht.

Gemäß **Anspruch 3** wird für jedes von der Motoreinheit gesteuerte Bedienelement des mobilen Bremsprobegerätes vorteilhaft an der Motoreinheit mindestens ein Endschalter oder mindestens ein elektronischer Sensor zur Feststellung der Endlagen des Bedienelements angebracht. Diese Schalter signalisieren der Fernwirkeinheit die erreichte Endstellung der Bedienelemente, z.B. des Knebelgriffs, nach Durchführen eines Befehls. Die Fernwirkeinheit stoppt daraufhin den Antrieb der Motoreinheit, z.B. durch Unterbrechen der Stromzufuhr beim elektrischen Motor oder durch Abriegeln der Druckluftzufuhr beim pneumatischen Antrieb.

Handelsübliche, nichtfernsteuerbare mobile Bremsprobegeräte verfügen in der Regel nicht über elektronische Luftdruckmesser. Die Daten zur Druckluftbeauschlagung können deshalb nicht an eine entfernte Stelle übermittelt werden. Stattdessen werden visuell abzulesende Anzeigen zur Verfügung gestellt, mit deren Hilfe der Bremsprobedurchführende entscheiden kann, welchen Zustand die Bremsanlage einnimmt. Wenn der Bremsprobedurchführende sich jedoch am anderen Ende des Zuges befindet und das Anlegen oder Lösen der Bremse befehlen möchte, ist das mobile Bremsprobegerät im Allgemeinen weit von ihm entfernt.

**Anspruch 4** beschreibt, wie der Bremsprobedurchführende erfindungsgemäß trotzdem von einer korrekt gelösten bzw. angelegten Bremse ausgehen kann.

Nachdem die Fernwirkeinheit vom mobilen Endgerät den Befehl "Bremsen lösen" bzw. "Bremsen anlegen" empfangen hat, startet sie die Motoreinheit zum Verstellen des zugehörigen Bedienelements. Dabei sendet sie auch unmittelbar den Zwischenstatus "Bremsen werden gelöst ..." bzw. "Bremsen werden angelegt ..." an das mobile Endgerät, was dem Anwender auch angezeigt wird. Wenn das Bedienelement seine Endlage erreicht, wird das vom zugehörigen Endschalter oder elektronischen Sensor an der Motoreinheit erfasst und an die Fernwirkeinheit übermittelt. Nun wird ausgenutzt, dass statistische Daten vorliegen, die aus dem jahrelangen Betrieb gewonnen wurden. Aus diesen Daten lässt sich ableiten, dass mit einer ausreichenden Wahrscheinlichkeit davon ausgegangen werden kann, dass nach einem bestimmten Zeitraum der Endstatus des Lösens oder des Anlegens der Bremse erreicht wurde. Die Fernwirkeinheit wartet also diesen geeigneten Zeitraum ab und sendet anschließend an das mobile Endgerät, dass der Endstatus "Bremsen wurden gelöst" bzw. "Bremsen wurden angelegt" erreicht wurde. Danach kann die Bremsprobe weitergeführt werden.

Als ein geeigneter Zeitraum hat sich beispielsweise die im Einsatz des IT-Verfahrens CDD ermittelte mittlere Dauer des Bremslösevorganges erwiesen, die bei ca. 28 Sekunden liegt. Die ermittelte mittlere Dauer des Bremsanlegevorgangs liegt bei ca. 5 Sekunden.

Für die automatische Steuerung des Vorgangs reichen eventuell die am mobilen Bremsprobegerät ursprünglich vorhandenen Luftdruckmesser und deren Anzeiger nicht aus. Es kann deshalb erforderlich werden, gemäß Anspruch 5 mindestens einen elektronischen Luftdruckmesser an die bereits vorhandenen Stellen der manuellen Druckluftmesser des mobilen Bremsprobegerätes einzubauen, dessen Messdaten zur automatischen Verarbeitung an die Fernwirkeinheit übertragen werden. Anhand dieser Daten, kann die Fernwirkeinheit den ganzen Bremsprobevorgang automatisiert steuern und überwachen. Die Messergebnisse bzw. der Status des Vorgangs können auf das mobile Endgerät übermittelt und dort angezeigt werden.

**Anspruch 6** stellt eine weitere Möglichkeit zur Bestimmung des vorhandenen Luftdrucks in der Hauptluftleitung dar. Zwischen der ausgangsseitigen (zugseitigen) Kupplung und dem anzuschließenden Druckluftschlauch wird eine Messvorrichtung eingebaut, deren Messdaten zur automatischen Verarbeitung an die Fernwirkeinheit übertragen werden. Anhand dieser Daten, kann die Fernwirkeinheit den ganzen Bremsprobevorgang automatisiert steuern und überwachen. Die Messergebnisse bzw. der Status des Vorgangs können auf das mobile Endgerät übermittelt und dort angezeigt werden.

In **Anspruch 7** ist eine indirekte Steuerung des Bremsprobegeräts beschrieben, wobei die Motoreinheit in Form von Motoren oder Elektrospulen in das Gehäuse des Bremsprobegerätes integriert ist.

Die Motoreinheit enthält mindestens einen (elektrischen oder pneumatischen) Motor bzw. Antrieb, dessen Drehmoment auf Stellelemente des Bremsprobegerätes übertragen wird.

Anstelle des mindestens einen Motors kann aber auch mindestens eine Elektrospule in das mobile Bremsprobegerät eingebaut werden. Die elektromagnetischen Kräfte, die von der Elektrospule erzeugt werden, dienen dazu, die entsprechenden Bedienelemente oder ggf. neu einzubauende Magnetventile des Bremsprobegerätes innerhalb dessen Gehäuse zu bedienen.

Eine weitere vorteilhafte Ausgestaltung ist in **Anspruch 8** beschrieben. Hierbei wird ein eigener Handsender zur Fernbedienung verwendet, der nur zur Steuerung seines zugehörigen spezifischen Bremsprobegerätes verwendet werden kann. Es wird also von der Fernwirkeinheit kein aufwändiger Datentransfer via Mobilfunk zur Durchführung der Bremsprobe benötigt, weshalb sie entsprechend vereinfacht werden kann. Auch wird hier nicht die Integration in das IT-Verfahren CDD durchgeführt. Die Datenübertragung kann beispielsweise über GSM erfolgen.

In **Anspruch 9** ist ein Verfahren zum Fernsteuern eines mobilen Bremsprobegerätes beschrieben. Das mobile Bremsprobegerät besteht dabei aus einer Fernwirkeinheit und einer Motoreinheit, wobei die Fernwirkeinheit anhand von Befehlen, die ihr von einem mobilen Kommunikationsendgerät durch eine Datenfernübertragung übermittelt werden, die Motoreinheit steuert und überwacht. Von der Motoreinheit werden gemäß den Steuerbefehlen, die von der Fernwirkeinheit an die Motoreinheit übermittelt werden, direkt oder indirekt die zur manuellen Bedienung des Bremsprobegerätes vorgesehenen Bedienelemente mithilfe von Motoren oder Elektrospulen bedient.

Dabei ist mindestens ein Endschalter oder mindestens ein elektronischer Sensor derart in die Motoreinheit integriert, dass die Fernwirkeinheit über diese feststellen kann, ob die Bedienelemente des mobilen Bremsprobegerätes ihre Endlage erreicht haben. Bei Erreichen der Endlage des zu einem Steuerbefehl gehörenden Bedienelements wird von der Fernwirkeinheit das zugehörige Stellelement der Motoreinheit abgeschaltet.

In **Anspruch 10** ist eine vorteilhafte Ausgestaltung des Verfahrens nach Anspruch 9 beschrieben.

Nachdem die Fernwirkeinheit vom mobilen Endgerät den Befehl "Bremsen lösen" bzw. "Bremsen anlegen" empfangen hat, wird von ihr an die Motoreinheit ein Befehl zum Starten des zum Verstellen des zugehörigen Bedienelements gehörenden Motors gesendet. Dabei wird von der Fernwirkeinheit auch unmittelbar der Zwischenstatus "Bremsen werden gelöst ..." bzw. "Bremsen werden angelegt ..." an das mobile Endgerät gesendet und dort angezeigt. Wenn das Bedienelement seine Endlage erreicht, wird das vom zugehörigen Endschalter erfasst und an die Fernwirkeinheit übermittelt. Aus der Auswertung statistischer Daten zur Zeitdauer des Lösens bzw. Anlegens der Bremse wird abgeleitet, nach welcher Zeitdauer mit einer geeigneten Wahrscheinlichkeit davon ausgegangen werden kann, dass der Endstatus des Lösens bzw. Anlegens der Bremse erreicht wurde. Nach Ablauf dieses geeigneten Zeitraums wird von der Fernwirkeinheit an das mobile Endgerät gesendet, dass der Endstatus "Bremsen wurden gelöst" bzw. "Bremsen wurden angelegt" erreicht wurde. Danach wird vom Bremsprobedurchführenden die Bremsprobe weitergeführt.

Als ein geeigneter Zeitraum hat sich beispielsweise die im jahrelangen Einsatz des CDD-Verfahrens ermittelte mittlere Dauer des Bremslösevorganges erwiesen, die bei ca. 28 Sekunden liegt. Die ermittelte mittlere Dauer des Bremsanlegevorgangs liegt bei ca. 5 Sekunden.

Die Erfindung wird im Folgenden anhand von drei Ausführungsbeispielen und vier Figuren näher erläutert.

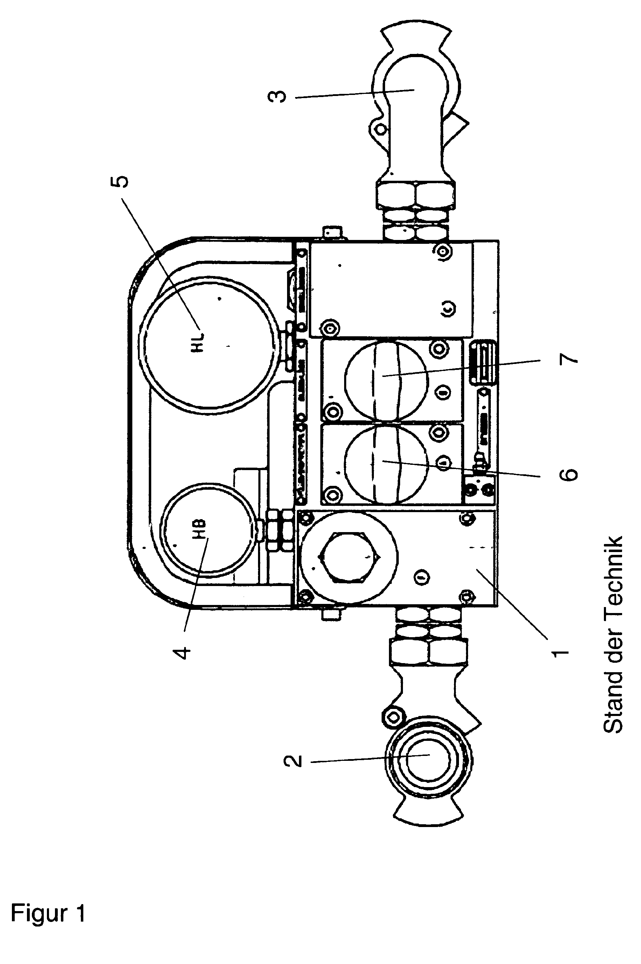

Fig. 1 zeigt ein mobiles Bremsprobegerät des Stands der Technik; hier ein PDR1-N (1). Am Anschluss 2 wird das Bremsprobegerät an der Eingangsseite mit Druckluft beaufschlagt. Das Anzeigegerät 4 zeigt den Luftdruck HBL an der Eingangsseite an, die Anzeige 5 den Luftdruck HL auf der Zugseite. Über den zugseitigen Anschluss 3 kann ein Zug mit Druckluft beaufschlagt werden. Die Knebelgriffe A (6) und B (7) dienen zum Steuern der Druckluft auf der Eingangs- bzw. Zugseite.

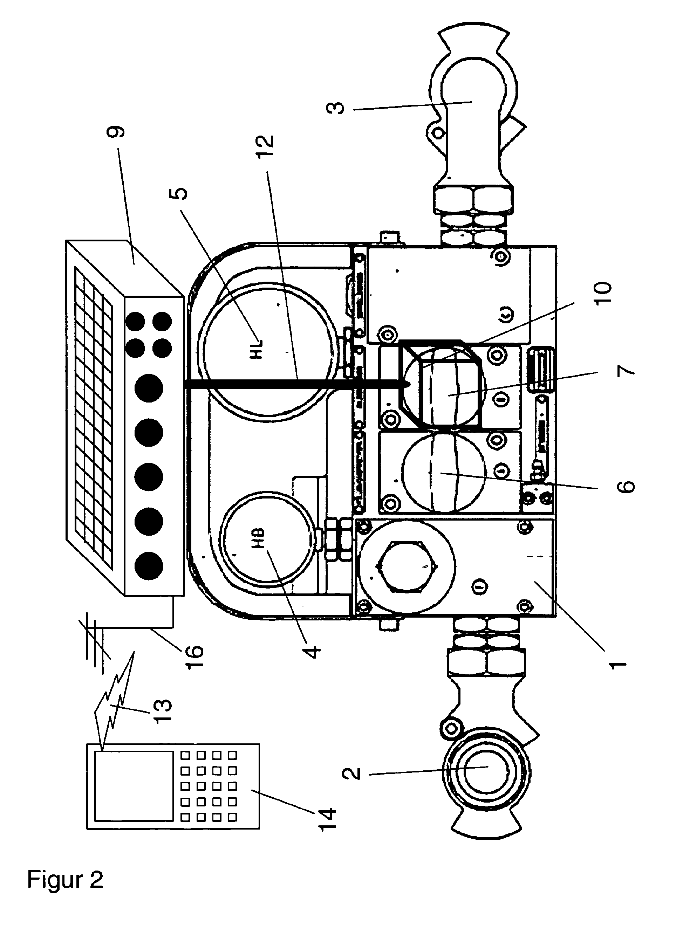

Fig. 2 zeigt ein Bremsprobegerät PDR1-N (1) mit Fernwirkeinheit 9 und außen angebrachter Motoreinheit 10. Mithilfe einer formschlüssigen Verbindung kann die Motoreinheit den Knebelgriff B (7) bedienen und somit die Zugseite mit Druckluft beaufschlagen, wenn über den manuell zu bedienenden Knebelgriff A (6) der eingangsseitige Absperrhahn geöffnet wurde. Die Fernwirkeinheit 9 ist mit der Motoreinheit 10 über das Kabel 12 verbunden. Dieses Kabel hat an beiden Enden jeweils einen Stecker, der in Fernwirkeinheit und Motoreinheit eingesteckt werden kann. Das mobile Endgerät 14 des IT-Verfahrens CDD (Cargo Digitale Datenkommunikation) überträgt über Mobilfunk 13 die Befehle zur Bremsprobe an die externe Mobilfunkantenne 16 der Fernwirkeinheit 9, die daraufhin die Motoreinheit 10 steuert und überwacht.

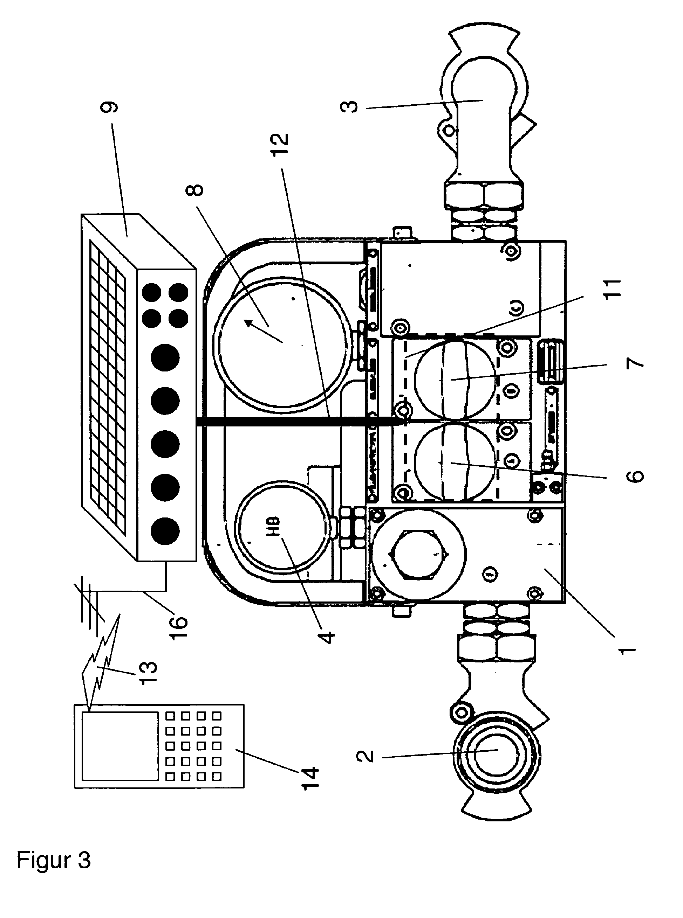

Fig. 3 zeigt ein Bremsprobegerät PDR1-N (1) mit Fernwirkeinheit 9 und außen nicht sichtbarer, integrierter Motoreinheit 11, die im Gehäuse des Bremsprobegerätes die zu den Knebelgriffen A (6) und B (7) gehörenden Absperrhähne bedient. Die Fernwirkeinheit 9 ist mit der Motoreinheit 11 über das Kabel 12 verbunden. Dieses Kabel hat an beiden Enden jeweils einen Stecker, der in Fernwirkeinheit und Motoreinheit eingesteckt werden kann. Das mobile Endgerät 14 des IT-Verfahrens CDD (Cargo Digitale Datenkommunikation) überträgt über Mobilfunk 13 die Befehle zur Bremsprobe an die externe Mobilfunkantenne 16 der Fernwirkeinheit 9, die daraufhin die Motoreinheit 11 steuert und überwacht. Über das Kabel 12 werden auch die Messdaten der im Bremsprobegerät zusätzlich integrierten elektronischen Luftdruckmesser 8 an die Fernwirkeinheit 9 übermittelt.

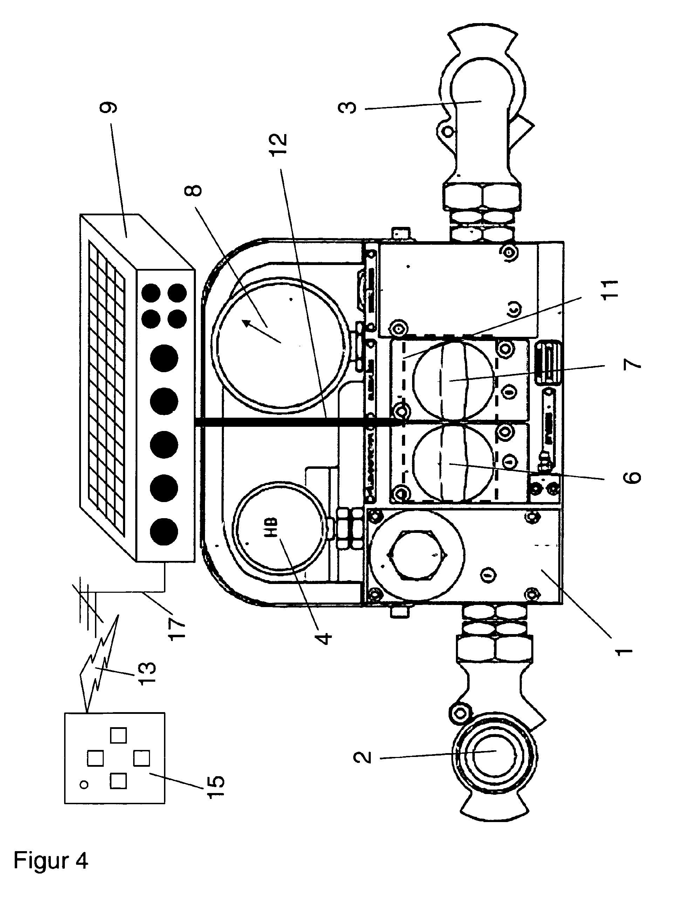

Fig. 4 zeigt ein Bremsprobegerät PDR1-N (1) mit Fernwirkeinheit 9 und außen nicht sichtbarer, integrierter Motoreinheit 11, die im Gehäuse des Bremsprobegerätes 1 die zu den Knebelgriffen A (6) und B (7) gehörenden Absperrhähne bedient. Die Fernwirkeinheit 9 ist mit der Motoreinheit 11 über das Kabel 12 verbunden. Dieses Kabel hat an beiden Enden jeweils einen Stecker, der in die Fernwirkeinheit 9 und in die Motoreinheit 11 werden kann. Der spezielle Handsender 15, der nur für dieses spezifische Bremsprobegerät 1 verwendet werden kann, überträgt per Funk 13 die Befehle zur Bremsprobe an die externe Funkantenne 17 der Fernwirkeinheit 9, die daraufhin die Motoreinheit 11 steuert und überwacht. Über das Kabel 12 werden auch die Messdaten der im Bremsprobegerät 1 zusätzlich integrierten elektronischen Luftdruckmesser 8 an die Fernwirkeinheit 9 übermittelt.

In einem **ersten Ausführungsbeispiel** werden sowohl das mobile Endgerät als auch das Telematikmodul des IT-Verfahrens CDD (Cargo Digitale Datenkommunikation) der DB Schenker Rail Deutschland AG verwendet, um die bei der DB Schenker Rail Deutschland AG zahlreich vorhandenen mobilen Bremsprobegeräte vom Typ PDR1-N (Bremsprobegerät für Güterzüge) fernzusteuern. Das CDD-Telematikmodul wird erfindungsgemäß als Fernwirkeinheit 9 verwendet, wobei es so modifiziert wird, dass es zur Aktivierung/Desaktivierung sowie zur Bereitstellung von Zwischen- und Endstatus einer Bremsprobe (Füllen wird durchgeführt / Bremsen gefüllt) verwendet werden kann. Das CDD-Telematikmodul ist hinsichtlich einer elektronischen Steuerung und nicht mehr mittels serieller Schnittstelle anzupassen: das CDD-Telematikmodul hat hierbei dann nur die Aufgabe, das Ein- und Ausschalten der Motoreinheit unter Beachtung der Drehrichtung und der Endlage der Bedienelemente des mobilen Bremsprobegerätes zu steuern. Die bisherige Kommunikation mit einer SPS (Speicher-programmierbaren Steuerung) eines Bremsprobegerätes über eine TTY-Schnittstelle mittels Adapter und Verwendung des entsprechenden Protokolls entfällt. Das Telematikmodul besteht dann z.B. nur noch aus einem Modem, einer Mobilfunkantenne und einem kleinen Computer.

Die Fernwirkeinheit 9 ist erfindungsgemäß mit einer externen Mobilfunkantenne 16 ausgestattet und besitzt Anzeigen zum Mobilfunk- und Gerätestatus sowie die Möglichkeit zur manuellen Ansteuerung des PDR1-N-Bremsprobegerätes 1. Die Fernwirkeinheit 9 ist auf das Bremsprobegerät 1 aufgesetzt und lösbar damit verbunden. Die Stromversorgung erfolgt mithilfe von Solarmodulen und Akkumulatoren, die wahlweise auch mit einem externen Ladegerät aufgeladen werden können. Das PDR1-N-Bremsprobegerät 1 besitzt zwei Knebelgriffe 6 und 7 zum Steuern der Absperrhähne. Die direkt wirkende Motoreinheit 10 wird nur auf den rechten Knebelgriff 7 formschlüssig aufgesteckt, der die zugseitige Druckluftbeaufschlagung regelt. Dabei ist die Motoreinheit 10 so konzipiert, dass keine oder nur eine geringere Verbreiterung des Bremsprobegeräts erfolgt, wenn sie auf den Knebelgriff 7 aufgesteckt ist.

Die Motoreinheit 10 enthält einen Elektro-Motor, der über die formschlüssige Verbindung den Knebelgriff drehen kann.

Ein Endschalter (nicht in den Figuren dargestellt) erfasst, ob der rechte Knebelgriff 7 bzw. das auf ihn gesteckte Formteil der Motoreinheit seine beiden möglichen Endlagen erreicht hat oder nicht.

Die Motoreinheit 10 ist über ein Kabel 12 mit der Fernwirkeinheit 9 verbunden und erhält so ihre elektrische Energie und die elektrischen Signale von der Fernwirkeinheit 9.

Das mobile Endgerät 14 des CDD-Systems kann ohne Änderungen verwendet werden. Mithilfe des mobilen Endgeräts 14 werden über Mobilfunk 13 die Befehle zur gewünschten Fernwirkeinheit 9 übermittelt. Damit kann die Bremsprobe gestartet und ihr Ablauf bis zum Ende gesteuert werden. Die Ergebnisse werden auf dem Display des mobilen Endgerätes 14 angezeigt.

Wenn im Verlauf der Bremsprobe der rechte Knebelgriff 7 gedreht werden soll, dreht die Motoreinheit 10 den Knebelgriff 7 in die entsprechende Stellung, wodurch zugseitig die Druckluft entweder anliegt oder abgestellt wird.

Zum Lösen der Bremse muss die Bremse mit Druckluft beaufschlagt werden. Der Bremsprobedurchführende gibt diesen Befehl mithilfe seines mobilen Endgeräts 14 an die Fernwirkeinheit 9. Die Fernwirkeinheit 9 übermittelt an die Motoreinheit 10 den Befehl, den zugseitigen Knebelgriff 7 auf "offen" zu stellen, so dass die Bremse mit Druckluft beaufschlagt wird. Gleichzeitig sendet sie an das mobile Endgerät 14 den Status "Bremsen werden gelöst", der dort angezeigt wird. Erst wenn mit hinreichend hoher Wahrscheinlichkeit davon ausgegangen werden kann, dass der Druck im Bremssystem hoch genug ist, um alle Bremsen zu lösen, kann der Bremsprobedurchführende den tatsächlichen Bremsenzustand überprüfen. Aus der statistischen Auswertung früherer Daten zur Dauer des Bremslösevorgangs im IT-Verfahren CDD ergibt sich ein mittlerer Wert von ca. 28 Sekunden. Dieser Wert wurde als geeignete Zeitdauer zum Lösen der Bremse in die Steuerung der Fernwirkeinheit 9 übernommen. 28 Sekunden nach Öffnen des zugseitigen Knebelgriffs 7 wird daher von der Fernwirkeinheit 9 die Statusmeldung "Bremsen wurden gelöst" an das mobile Endgerät 14 gesendet. Der Bremsprobedurchführende kann nun mit der Überprüfung der Bremse auf korrektes Lösen beginnen.

Zum Anlegen der Bremse muss der Bremsdruck reduziert werden. Der Bremsprobedurchführende gibt diesen Befehl mithilfe seines mobilen Endgeräts 14 an die Fernwirkeinheit 9. Die Fernwirkeinheit 9 übermittelt an die Motoreinheit 10 den Befehl, den zugseitigen Knebelgriff 7 auf "geschlossen" zu stellen, so dass der Bremsdruck in der Hauptleitung reduziert wird. Gleichzeitig sendet sie an das mobile Endgerät 14 den Status "Bremsen werden angelegt", der dort angezeigt wird. Erst wenn mit hinreichend hoher Wahrscheinlichkeit davon ausgegangen werden kann, dass der Druck im Bremssystem niedrig genug ist, um alle Bremsen anzulegen, kann der Bremsprobedurchführende den tatsächlichen Bremsenzustand überprüfen. Aus der statistischen Auswertung früherer Daten zur Dauer des Bremsanlegevorgangs im IT-Verfahren CDD ergibt sich ein mittlerer Wert von ca. 5 Sekunden. Dieser Wert wurde als geeignete Zeitdauer zum Anlegen der Bremse in die Steuerung der Fernwirkeinheit 9 übernommen. 5 Sekunden nach Schließen des zugseitigen Knebelgriffs 7 wird daher von der Fernwirkeinheit 9 die Statusmeldung "Bremsen wurden angelegt" an das mobile Endgerät 14 gesendet. Der Bremsprobedurchführende kann nun mit der Überprüfung der Bremse auf korrektes Anlegen beginnen.

Nach Beendigung der Bremsprobe kann die Vorrichtung einfach von dem Bremsprobegerät 1 gelöst und zum nächsten Einsatzort gebracht werden.

In ähnlicher Weise kann auch ein Bremsprobegerät vom Typ PDR1-N1 (Bremsprobegerät für Reisezugwagen) in dargestellter Vorgehensweise funkferngesteuert werden. Hierbei ist zu beachten, dass ein PDR1-N1 Bremsprobegerät - anders als ein PDR1-N Bremsprobegerät - drei Bedienelemente hat.

Allgemein können die in der Patentschrift beschriebenen Vorrichtungen und Verfahren für alle mobilen Bremsprobegeräte eingesetzt werden, die über manuelle Bedienelemente verfügen, die direkt oder indirekt bedient werden können.

In einem **zweiten Ausführungsbeispiel** wird die indirekt wirkende Motoreinheit 11 in ein Bremsprobegerät PDR1-N (1) integriert. Zwei Motoren, jeweils einer für jeden Knebelgriff (6 und 7), sind - von außen nicht mehr erkennbar - so in das Bremsprobegerät eingebaut, dass sie innerhalb des Gehäuses die Absperrhähne bedienen. Weiterhin ist ein elektronischer Luftdruckmesser 8 auf der Ausgangsseite (zugseitig) in das PDR1-N integriert. Die Fernwirkeinheit ist über ein Kabel 12 mit einer Steckverbindung mit dem Bremsprobegerät 1 verbunden. Über das Kabel 12 werden nun auch die Messergebnisse der elektronischen Luftdruckmesser 8 an die Fernwirkeinheit 9 übermittelt.

Aufgrund dieser erweiterten Funktionalität kann die bereits bekannte, im CDD-Verfahren verwendete Definition von Zwischen- und Endstatus einer Bremsprobe verwendet werden.

Ansonsten ist die Fernwirkeinheit 9 aufgebaut wie in Ausführungsbeispiel 1.

Das mobile Endgerät 14 des CDD-Systems kann ohne Änderungen verwendet werden. Mithilfe des mobilen Endgeräts 14 werden über Mobilfunk 13 die Befehle zur gewünschten Fernwirkeinheit 9 übermittelt. Damit kann die Bremsprobe gestartet und ihr Ablauf bis zum Ende gesteuert werden. Die Ergebnisse werden auf dem Display des mobilen Endgerätes angezeigt.

Wenn im Verlauf der Bremsprobe die Absperrhähne bedient werden sollen, stellen die Motoren der Motoreinheit 11 im Bremsprobegerät die entsprechenden Zustände ein, wodurch zugseitig die Druckluft entweder anliegt oder abgestellt wird.

Nach Beendigung der Bremsprobe kann die Fernwirkeinheit 9 von dem Bremsprobegerät 1 gelöst und zum nächsten mit einer passenden Motoreinheit 11 versehenen Bremsprobegerät gebracht werden.

In einem **dritten Ausführungsbeispiel** wird eine spezielle Fernwirkeinheit 9 verwendet, die nur von einem definierten Handsender 15 funkferngesteuert werden kann. Die technischen Anforderungen an die Datenübertragung fallen dadurch anspruchsloser aus. Anstelle der Mobilfunkantenne ist eine Funkantenne 17 an der Fernwirkeinheit 9 angebracht. Ansonsten ist die Fernwirkeinheit 9 wie auch die Motoreinheit 11 aufgebaut wie im zweiten Ausführungsbeispiel.

Die Erfindung kann auch mit Motoreinheiten versehen werden, die Schalter oder Griffe beliebiger Art betätigen können. Generell werden mit der Erfindung allgemein Bedienelemente erfasst, die zur manuellen Bedienung eines Bremsprobegerätes geeignet sind.

### Bezugszeichenliste

1. Mobiles Bremsprobegerät, z.B. PDR1-N
2. Luftkupplung für HBL-Versorgung, eingangsseitig
3. Luftkupplung für HL-Leitung, zugseitig
4. HBL-Druckmesser
5. HL-Druckmesser
6. Knebelgriff für Absperrhahn A
7. Knebelgriff für Absperrhahn B
8. elektronischer Drucksensor, hier mit analoger Anzeige
9. Fernwirkeinheit
10. Motoreinheit mit formschlüssiger Verbindung zu Knebelgriff
11. Motoreinheit (nicht sichtbar) im Gehäuse
12. Verbindungskabel mit Steckverbinder oder Kupplung
13. Datenfernübertragung, z.B. Mobilfunk oder Funk
14. Mobiles Endgerät des CDD-Verfahrens
15. spezifischer Handsender zur Funkfernsteuerung
16. externe Mobilfunkantenne
17. externe Funkantenne

## Patentansprüche

1. Vorrichtung zum Fernsteuern eines manuell bedienbaren mobilen Bremsprobegerätes, (1) bestehend aus einer Fernwirkeinheit (9) und einer Motoreinheit, (10, bzw. 11) wobei die Fernwirkeinheit (9) anhand von Befehlen, die ihr von einem mobilen Kommunikationsendgerät (14, bzw. 15) durch eine Datenfernübertragung (13) übermittelt werden, die Motoreinheit (10, bzw. 11) steuert und überwacht, **dadurch gekennzeichnet, dass** die Motoreinheit direkt (10) oder indirekt (11) die zur manuellen Bedienung des Bremsprobegerätes vorgesehenen (6 und/oder 7) Bedienelemente bedient.

2. Vorrichtung zum Fernsteuern eines manuell bedienbaren mobilen Bremsprobegerätes (1) gemäß Anspruch 1, wobei die Motoreinheit (10) so von außen auf das Bremsprobegerät (1) montiert ist, dass mindestens eines der Bedienelemente (6 oder 7) zur manuellen Betätigung des Bremsprobegeräts (1) formschlüssig umfasst ist, sodass die direkt wirkende Motoreinheit (10) das mindestens eine Bedienelemente (6, bzw. 7) so bedient, wie das sonst per Hand erfolgte.

3. Vorrichtung zum Fernsteuern eines manuell bedienbaren mobilen Bremsprobegerätes (1) gemäß Anspruch 1 oder 2, wobei mindestens ein Endschalter und/oder mindestens ein elektronischer Sensor derart an der Motoreinheit (10, bzw. 11) angebracht sind, dass die Fernwirkeinheit (9) über diese feststellen kann, ob die Bedienelemente (6 und/oder 7) des mobilen Bremsprobegerätes (1) ihre Endlage erreicht haben, und falls die zu einem Steuerbefehl gehörende Endlage eines Bedienelements erreicht wurde, die Fernwirkeinheit (9) das zugehörige Stellelement der Motoreinheit (10, bzw. 11) abschaltet.

4. Vorrichtung zum Fernsteuern eines manuell bedienbaren mobilen Bremsprobegerätes (1) gemäß Anspruch 3, wobei
- nachdem die Fernwirkeinheit (9) den Befehl "Bremsen lösen" empfangen hat, die Fernwirkeinheit (9) das zugehörige Stellelement zum Verstellen des zugehörigen Bedienelements (6 und/oder 7) in der Motoreinheit startet, und unmittelbar den Zwischenstatus "Bremsen werden gelöst ..." an das mobile Endgerät (14) sendet, und nachdem ein Endschalter der Motoreinheit (10, bzw. 11) am zugehörigen Bedienelement (6 und/oder 7) des Bremsprobegerätes (1) signalisiert hat, dass das Bedienelement die erforderliche Endposition erreicht hat, die Fernwirkeinheit (9) einen geeigneten Zeitraum abwartet und anschließend an das mobile Endgerät (14) sendet, dass der Endstatus "Bremsen wurden gelöst" erreicht wurde, und/oder
- nachdem die Fernwirkeinheit (9) den Befehl "Bremsen anlegen" empfangen hat, die Fernwirkeinheit (9) das zugehörige Stellelement zum Verstellen des zugehörigen Bedienelements (6 und/oder 7) in der Motoreinheit (10, bzw. 11) startet, und unmittelbar den Zwischenstatus "Bremsen werden angelegt ..." an das mobile Endgerät (14) sendet, und nachdem ein Endschalter der Motoreinheit (10, bzw. 11) am zugehörigen Bedienelemente (6 und/oder 7) des Bremsprobegerätes (1) signalisiert hat, dass das Bedienelemente (6 und/oder 7) die erforderliche Endposition erreicht hat, die Fernwirkeinheit (9) einen geeigneten Zeitraum abwartet und anschließend an das mobile Endgerät (14) sendet, dass der End-status "Bremsen wurden angelegt" erreicht wurde.

5. Vorrichtung zum Fernsteuern eines manuel bedienbaren mobilen Bremsprobegerätes (1) gemäß mindestens einem der vorigen Ansprüche, wobei mindestens ein elektronisches Luftdruckmessgerät (8) die manuellen Luftdruckmessgeräte (4, bzw. 5) des mobilen Bremsprobegerätes (1) ersetzt.

6. Vorrichtung zum Fernsteuern eines manuell bedienbaren mobilen Bremsprobegerätes (1) gemäß mindestens einem der vorigen Ansprüche, wobei zwischen der ausgangseitigen (zugseitigen) Kupplung (3) und dem anzuschließenden Druckluftschlauch eine Messvorrichtung eingebaut ist, die ihre Messdaten zur automatischen Verarbeitung an die Fernwirkeinheit (9) überträgt.

7. Vorrichtung zum Fernsteuern eines manuellbedienbaren mobilen Bremsprobegerätes (1) gemäß mindestens einem der vorigen Ansprüche, wobei die indirekt wirkende Moroteinheit 11 in Form von Motoren oder Elektrospulen in das Gehäuse des Bremsprobegerätes (1) integriert ist.

8. Vorrichtung zum Fernsteuern eines manuell bedienbaren mobilen Bremsprobegerätes (1) gemäß mindestens einem der vorigen Ansprüche, wobei die Fernbedienung per Funk über einen Bremsprobegerät-spezifischen Handsender (15) erfolgt.

9. Verfahren zum Fernsteuern eines manuell bedienbaren mobilen Bremsprobegerätes, (1) bestehend aus einer Fernwirkeinheit (9) und einer Motoreinheit, (10, bzw. 11) wobei die Fernwirkeinheit (9) anhand von Befehlen, die ihr von einem mobilen Kommunikationsendgerät (14, bzw. 15) durch eine Datenfernübertragung übermittelt werden, die Motoreinheit (10, bzw. 11) steuert und überwacht, **dadurch gekennzeichnet, dass** von der Motoreinheit direkt (10) oder indirekt (11) die zur manuellen Bedienung des Bremsprobegerätes vorgesehenen Bedienelemente (6 und/oder 7) bedient werden und dabei mindestens ein Endschalter und/oder mindestens ein elektronischer Sensor derart an der Motoreinheit (10, bzw. 11) angebracht ist, dass von der Fernwirkeinheit (9) über diese festgestellt wird, ob die Bedienelemente (6 und/oder 7) des mobilen Bremsprobegerätes (1) ihre Endlage erreicht haben, und bei Erreichen der Endlage des zu einem Steuerbefehl gehörenden Bedienelements (6 und/oder 7) von der Fernwirkeinheit (9) das zugehörige Stellelement der Motoreinheit abgeschaltet wird.

10. Verfahren zum Fernsteuern eines manuell bedienbaren mobilen Bremsprobegerätes, (1) gemäß Anspruch 9, wobei
- nachdem der von einem mobilen Endgerät (14 oder 15) zur Fernwirkeinheit (9) am Bremsprobegerät (1) gesendete Befehl "Bremsen lösen" von der Fernwirkeinheit (9) empfangen wurde, von der Fernwirkeinheit (9) der Motor zum Verstellen des zugehörigen Bedienelements (6 oder 7) in der Motoreinheit (10, bzw. 11) gestartet wird, und von der Fernwirkeinheit (9) unmittelbar der Zwischenstatus "Bremsen werden gelöst ..." an das mobile Endgerät (14 oder 15) gesendet wird, und nachdem der Endschalter signalisiert hat, dass das Stellelement der Motoreinheit (10, bzw. 11) das zugehörige Bedienelement (6 oder 7) in die erforderliche Endposition gedreht hat, ein geeigneter Zeitraum abgewartet wird und anschließend von der Fernwirkeinheit (9) an das mobile Endgerät (14 oder 15) gesendet wird, dass der Endstatus "Bremsen wurden gelöst" erreicht wurde,
- nachdem die Fernwirkeinheit (9) den Befehl "Bremsen anlegen" empfangen hat, von der Fernwirkeinheit (9) das zugehörige Stellelement zum Verstellen des zugehörigen Bedienelements (6 oder 7) in der Motoreinheit (10, bzw. 11) gestartet wird, und unmittelbar der Zwischenstatus "Bremsen werden angelegt ..." an das mobile Endgerät (14 oder 15) gesendet wird, und nachdem ein Endschalter der Motoreinheit (10, bzw. 11) am zugehörigen Bedienelement (6 oder 7) des Bremsprobegerätes (1) signalisiert hat, dass das Bedienelement (6 oder 7) die erforderliche Endposition erreicht hat, von der Fernwirkeinheit (9) ein geeigneter Zeitraum abgewartet wird und anschließend an das mobile Endgerät (14 oder 15) gesendet wird, dass der Endstatus "Bremsen wurden angelegt" erreicht wurde.

## Claims

1. A device for remotely controlling a manually operable mobile brake testing apparatus 1, consisting of a remote control unit 9 and a motor unit 10 or 11, wherein the remote control unit 9 controls and monitors the motor unit 10 or 11 based on commands that are transmitted to the remote control unit from a mobile communication terminal 14 or 15 in the form of a remote data transmission 13, **characterized in that** the motor unit directly 10 or indirectly 11 operates the control elements 6 and/or 7 provided for manually operating the brake testing apparatus.

2. The device for remotely controlling a manually operable mobile brake testing apparatus 1 according to Claim 1, wherein the motor unit 10 is mounted on the brake testing apparatus 1 from outside in such a way that at least one of the control elements 6, 7 for manually actuating the brake testing apparatus 1 is encompassed with a positive fit such that the directly acting motor unit 10 operates the at least one control element 6 or 7 in the same fashion as it would otherwise be operated manually.

3. The device for remotely controlling a manually operable mobile brake testing apparatus 1 according to Claim 1 or 2, wherein at least one limit switch and/or at least one electronic sensor are arranged on the motor unit 10 or 11 in such a way that the remote control unit 9 can determine with the aid of this limit switch and/or electronic sensor whether the control elements 6 and/or 7 of the mobile brake testing apparatus 1 have reached their final position, and wherein the corresponding actuating element of the motor unit 10 or 11 is switched off by the remote control unit 9 when the final position of a control element affiliated with a control command is reached.

4. The device for remotely controlling a manually operable mobile brake testing apparatus 1 according to Claim 3, wherein
- the remote control unit 9 starts the corresponding actuating element for adjusting the corresponding control element 6 and/or 7 in the motor unit after the remote control unit 9 has received the command "release brakes" and immediately transmits the intermediate status "brakes are being released..." to the mobile terminal 14, and wherein the remote control unit 9 waits for a suitable period of time after a limit switch of the motor unit 10 or 11 on the corresponding control element 6 and/or 7 of the brake testing apparatus 1 has signaled that the control element 6 and/or 7 has reached the required end position and subsequently transmits to the mobile terminal 14 that the final status "brakes were released" has been reached,
and/or
- the remote control unit 9 starts the corresponding actuating element for adjusting the corresponding control element 6 and/or 7 in the motor unit after the remote control unit 9 has received the command "apply brakes" and immediately transmits the intermediate status "brakes are being applied..." to the mobile terminal 14, and wherein the remote control unit 9 waits for a suitable period of time after a limit switch of the motor unit 10 or 11 on the corresponding control element 6 and/or 7 of the brake testing apparatus 1 has signaled that the control element 6 and/or 7 has reached the required end position and subsequently transmits to the mobile terminal 14 that the final status "brakes were applied" has been reached.

5. The device for remotely controlling a manually operable mobile brake testing apparatus 1 according to at least one of the preceding claims, wherein at least one electronic air pressure gauge 8 replaces the manual air pressure gauges 4 and 5 of the mobile brake testing apparatus 1.

6. The device for remotely controlling a manually operable mobile brake testing apparatus 1 according to at least one of the preceding claims, wherein a measuring device is installed between the coupling 3 on the output side (driving side) and the compressed air hose to be connected and transmits its measuring data to the remote control unit 9 for automated processing.

7. The device for remotely controlling a manually operable mobile brake testing apparatus 1 according to at least one of the preceding claims, wherein the indirectly acting motor unit 11 is integrated into the housing of the brake testing apparatus 1 in the form of motors or electric coils.

8. The device for remotely controlling a manually operable mobile brake testing apparatus 1 according to at least one of the preceding claims, wherein the remote control is realized via radio by means of a hand-held transmitter 15 specific to the brake testing apparatus.

9. A method for remotely controlling a manually operable mobile brake testing apparatus 1, consisting of a remote control unit 9 and a motor unit 10 or 11, wherein the remote control unit 9 controls and monitors the motor unit 10 or 11 based on commands that are transmitted to the remote control unit from a mobile communication terminal 14 or 15 in the form of a remote data transmission, **characterized in that** the motor unit directly 10 or indirectly 11 operates the control elements 6 and/or 7 provided for manually operating the brake testing apparatus, **in that** at least one limit switch and/or at least one electronic sensor are arranged on the motor unit 10 or 11 in such a way that the remote control unit 9 can determine with the aid of this limit switch and/or electronic sensor whether the control elements 6 and/or 7 of the mobile brake testing apparatus 1 have reached their final position, and **in that** the corresponding actuating element of the motor unit is switched off by the remote control unit 9 when the final position of the control element 6 and/or 7 affiliated with a control command is reached.

10. The method for remotely controlling a manually operable mobile brake testing apparatus 1 according to Claim 9, wherein
- the remote control unit 9 starts the motor for adjusting the corresponding control element 6 and/or 7 in the motor unit 10 or 11 after the remote control unit 9 has received the command "release brakes," which was transmitted to the remote control unit 9 on the brake testing apparatus 1 from a mobile terminal 14 or 15, and the remote control unit 9 immediately transmits the intermediate status "brakes are being released..." to the mobile terminal 14 or 15, and wherein a suitable period of time elapses after the limit switch has signaled that the actuator of the motor unit 10 or 11 has turned the corresponding control element 6 and/or 7 into the required end position and the remote control unit 9 subsequently transmits to the mobile terminal 14 or 15 that the final status "brakes were released" has been reached,
- the remote control unit 9 starts the corresponding actuating element for adjusting the corresponding control element 6 and/or 7 in the motor unit 10 or 11 after the remote control unit 9 has received the command "apply brakes" and immediately transmits the intermediate status "brakes are being applied..." to the mobile terminal 14 or 15, and wherein the remote control unit 9 waits for a suitable period of time after a limit switch of the motor unit 10 or 11 on the corresponding control element 6 and/or 7 of the brake testing apparatus 1 has signaled that the control element 6 and/or 7 has reached the required end position and subsequently transmits to the mobile terminal 14 or 15 that the final status "brakes were applied" has been reached.

## Revendications

1. Dispositif de télécommande d'un appareil mobile d'essai de freins actionnable manuellement 1, composé d'une unité d'action à distance 9 et d'une unité motrice 10 ou 11, dans lequel l'unité d'action à distance 9 commande et surveille l'unité motrice 10 ou 11 à partir d'instructions qui lui sont transmises par un terminal de communication mobile 14 ou 15 ou par un télétransfert de données, **caractérisé en ce que** l'unité motrice actionne directement 10 ou indirectement 11 les éléments de commande 6 et/ou 7 prévus pour l'actionnement manuel de l'appareil d'essai de freins.

2. Dispositif de télécommande d'un appareil mobile d'essai de freins actionnable manuellement 1 selon la revendication 1, l'unité motrice 10 étant montée de l'extérieur sur l'appareil d'essai de freins 1 de manière à ce qu'au moins un des éléments d'actionnement 6, 7 permettant l'actionnement manuel de l'appareil d'essai de freins 1 soit entouré par correspondance géométrique, de sorte que l'unité motrice agissant directement 10 actionne l'au moins un élément d'actionnement 6 ou 7 comme cela s'est produit manuellement.

3. Dispositif de télécommande d'un appareil mobile d'essai de freins actionnable manuellement 1 selon la revendication 1 ou 2, dans lequel au moins un interrupteur de fin de course et/ou au moins un capteur électronique sont installés sur l'unité motrice 10 ou 11 de manière à ce que l'unité d'action à distance 9 puisse constater par le biais de ceux-ci si les éléments d'actionnement 6 et/ou 7 de l'appareil mobile d'essai de freins 1 ont atteint leur position de fin de course et, si la position de fin de course correspondant à une instruction de commande d'un élément d'actionnement a été atteinte, l'unité d'action à distance 9 arrête l'élément de positionnement correspondant de l'unité motrice 10 ou 11.

4. Dispositif de télécommande d'un appareil mobile d'essai de freins actionnable manuellement 1 selon la revendication 3, dans lequel
- une fois que l'unité d'action à distance 9 a reçu l'instruction "Desserrer les freins", l'unité d'action à distance 9 démarre l'élément de positionnement correspondant pour régler l'élément d'actionnement correspondant 6 et/ou 7 dans l'unité motrice et communique directement l'état intermédiaire "Les freins sont desserrés..." au terminal mobile 14 et, une fois qu'un interrupteur de fin de course de l'unité motrice 10 ou 11 de l'élément d'actionnement correspondant 6 et/ou 7 de l'appareil d'essai de freins 1 a signalé que l'élément d'actionnement 6 et/ou 7 a atteint la position de fin de course requise, l'unité d'action à distance 9 attend pendant un laps de temps adapté puis communique au terminal mobile 14 que l'état final "Les freins sont desserrés..." a été atteint, et/ou
- une fois que l'unité d'action à distance 9 a reçu l'instruction "Serrer les freins", l'unité d'action à distance 9 démarre l'élément de positionnement correspondant pour régler l'élément de positionnement correspondant 6 et/ou 7 dans l'unité motrice 10 ou 11 et communique directement l'état intermédiaire "Les freins sont serrés..." au terminal mobile 14 et, une fois qu'un interrupteur de fin de course de l'unité motrice 10 ou 11 de l'élément d'actionnement correspondant 6 et/ou 7 de l'appareil d'essai de freins 1 a signalé que l'élément d'actionnement 6 et/ou 7 a atteint la position de fin de course requise, l'unité d'action à distance 9 attend pendant un laps de temps adapté puis communique au terminal mobile 14 que l'état final "Les freins sont serrés..." a été atteint.

5. Dispositif de télécommande d'un appareil mobile d'essai de freins actionnable manuellement 1 selon au moins une des revendications précédentes, dans lequel au moins un instrument électronique de mesure de pression d'air 8 remplace les instruments manuels de mesure de pression d'air 4 ou 5 de l'appareil mobile d'essai de freins 1.

6. Dispositif de télécommande d'un appareil mobile d'essai de freins actionnable manuellement 1 selon au moins une des revendications précédentes, dans lequel est intégré, entre l'accouplement situé côté sortie (coté train) 3 et le tuyau d'air comprimé à raccorder, un dispositif de mesure qui transfère ses données de mesure pour traitement automatique à l'unité d'action à distance 9.

7. Dispositif de télécommande d'un appareil mobile d'essai de freins actionnable manuellement 1 selon au moins une des revendications précédentes, dans lequel l'unité motrice agissant indirectement 11 est intégrée sous la forme de moteurs ou de bobines électriques dans le boîtier de l'appareil mobile d'essai de freins 1.

8. Dispositif de télécommande d'un appareil mobile d'essai de freins actionnable manuellement 1 selon au moins une des revendications précédentes, dans lequel la télécommande se fait par radio via un émetteur manuel spécifique à l'appareil mobile d'essai de freins 15.

9. Procédé de télécommande d'un appareil mobile d'essai de freins actionnable manuellement 1, composé d'une unité d'action à distance 9 et d'une unité motrice 10 ou 11, l'unité d'action à distance 9 commandant et surveillant l'unité motrice 10 ou 11 à partir d'instructions qui lui sont envoyées par un terminal de communication mobile 14 ou 15 par transfert de données, **caractérisé en ce que** les éléments d'actionnement 6 et/ou 7 prévus pour l'actionnement manuel de l'appareil mobile d'essai de freins sont actionnés directement 10 ou indirectement 11 par l'unité motrice et qu'alors au moins un interrupteur de fin de course et/ou au moins un capteur électronique est installé sur l'unité motrice 10 ou 11 de manière à ce qu'il soit constaté par l'unité d'action à distance 9 par l'intermédiaire de ceux-ci si les éléments d'actionnement 6 et/ou 7 de l'appareil mobile d'essai de freins 1 ont atteint leur position de fin de course et, en cas d'atteinte de la position de fin de course de l'élément d'actionnement 6 et/ou 7 correspondant à une instruction de commande, l'élément de positionnement correspondant de l'unité motrice est arrêté par l'unité d'action à distance 9.

10. Procédé de télécommande d'un appareil mobile d'essai de freins actionnable manuellement 1 selon la revendication 9, dans lequel,
- une fois que l'instruction "Desserrer les freins" envoyée par un terminal mobile 14 ou 15 de l'unité d'action à distance 9 de l'appareil d'essai de freins 1 a été reçue par l'unité d'action à distance 9, le moteur de réglage de l'élément d'actionnement correspondant 6 ou 7 est démarré par l'unité d'action à distance 9 dans l'unité motrice 10 ou 11 et l'état intermédiaire "Les freins sont desserrés..." est communiqué directement par l'unité d'action à distance 9 au terminal mobile 14 ou 15 et, une fois que l'interrupteur de fin de course a signalé que l'élément de positionnement de l'unité motrice 10 ou 11 a tourné l'élément d'actionnement correspondant 6 ou 7 dans la position de fin de course requise, on attend pendant un laps de temps adapté puis l'unité d'action à distance 9 communique au terminal mobile 14 ou 15 que l'état final "Les freins ont été desserrés" a été atteint.
- une fois que l'unité d'action à distance 9 a reçu l'instruction "Serrer les freins", l'élément de positionnement correspondant est démarré pour régler l'élément d'actionnement correspondant 6 ou 7 dans l'unité motrice 10 ou 11 et l'état intermédiaire "Les freins sont serrés..." est communiqué directement au terminal mobile 14 ou 15 et, une fois qu'un interrupteur de fin de course de l'unité motrice 10 ou 11 de l'élément d'actionnement 6 ou 7 de l'appareil d'essai de freins 1 a signalé que l'élément d'actionnement 6 ou 7 a atteint la position de fin de course requise, l'unité d'action à distance 9 attend pendant un laps de temps adapté puis l'unité d'action à distance 9 communique au terminal mobile 14 ou 15 que l'état final "Les freins ont été serrés" a été atteint.
